# EUROPEAN PATENT APPLICATION

(11) **EP 4 624 224 A1**
(43) Date of publication of application: **01.10.2025**
(21) Application number: 25166051.0
(22) Date of filing: 25.03.2025
(51) Int. Cl.: B60L 3/12, B60L 15/20, B60L 53/12, B60L 53/14, B60L 58/12, G06F 9/455, B60W 50/00, B60L 53/10, B60L 53/22

(54) **AN INTEGRATED CONTROL SYSTEM FOR AN ELECTRIC VEHICLE AND RELATED METHOD**

(30) Priority: 26.03.2024 IT 202400006748
(71) Applicant: Stellantis Europe S.p.A., 10135 Torino (TO) (IT)
(72) Inventor: TAVELLA, Domenico, 10135 Torino (IT); MUHIALDIN, Ali, Auburn Hills, 48326 (US); PECIAROLO, Alessandro, 10135 Torino (IT)
(74) Representative: Buzzi, Notaro & Antonielli d'Oulx S.p.A.

(57) **Abstract**

An integrated control system (100; 300) for an electric vehicle is described. The vehicle comprises one or more electric traction motors (151), one or more high-voltage batteries (222), a charge port (223) and one or more power converters (221) configured to supply the electric traction motor/motors (151) via the battery/batteries (222), and to recharge the battery/batteries (222) via the charge port (223). The integrated control system (100; 300) includes a microcontroller (301), a Combined Charging System, CCS, interface (331) and an Ethernet interface (341).

In particular, the microcontroller (301) comprises a plurality of microprocessors configured to execute a plurality of software modules. A first software module is configured (102) to monitor (203) the battery/batteries (222), monitor and control (201, 205) the power converter/converters (221) to supply the electric traction motor/motors (151) via the battery/batteries (222) and to recharge the battery/batteries (222) via the charge port (223), and manage (206, 207) the exchange of information with a charging station (223a).

A second software module (104) is configured to monitor and control the electric traction motor/motors (151).

## Description

### Field of the invention

This description concerns control systems for electric vehicles of the type comprising one or more electric traction motors and one or more high-voltage batteries.

### Prior art

In the automotive sector, decentralized architectures are a type of E/E (Electrical/Electronic) architecture in which the implemented functions are distributed among a large number of interconnected ECUs (Electronic Control Units). In such architectures, each ECU is able to process its own data and communicate with the other ECUs to implement advanced vehicle functions. Currently, there are many vehicles that include a large number of ECUs inside them and their number is expected to grow, in fact in decentralized architectures there is usually a one-to-one association between the vehicle functions and the ECUs. For example, a solution of this type is disclosed by document EP 3 862 878 A1.

Decentralized E/E architectures are widely used due to their ease of integration, physical separation of components from different subsystems, and repairability.

However, decentralized E/E architectures suffer from scalability issues when used to implement complex electrical and electronic systems, such as those required by modern BEV (Battery Electric Vehicle) or PHEV (Plug-in Hybrid Electric Vehicle) vehicles. In general, these issues include increased costs, wiring complexity, software fragmentation, and security vulnerabilities.

For this reason, several architectures have been proposed, such as domain architecture, zone architecture, and service-oriented architecture. For example, solutions for a zone architecture are proposed by Bosch^{®}, NXP^{®}, or Texas Instruments^{®}. Specifically, an Automotive Zone Controller (AZC) is an electronic device that manages and controls various functions and devices within a specific zone or area of a vehicle, such as the front, rear, left, right, or center. The AZC is part of the new vehicle electronic architectures required for the software-defined vehicle, which aims to reduce the complexity, cost, and weight of wiring and components, while increasing the performance, flexibility, and scalability of vehicle systems.

An AZC acts as a hub that connects sensors, actuators, and peripherals in a zone to a central processing unit using high-speed interfaces, such as Ethernet or CAN-FD. An AZC also manages power distribution in a zone, using solid-state switches and relays. An AZC therefore has several advantages over conventional vehicle electronic architectures, such as:
- reduced complexity: an AZC reduces the number of wires, connectors and control units in a vehicle, simplifying manufacturing and assembly processes and improving the quality and reliability of vehicle systems.
- increased performance: an AZC enables faster and safer data transmission and processing in a vehicle, improving the functionality and safety of vehicle systems, such as ADAS, infotainment, lighting and HVAC.
- increased flexibility: an AZC enables greater customization of vehicle systems, as well as greater adaptability and scalability to software and hardware changes and updates, enabling the software-defined vehicle to be achieved.

In particular, in BEV and PHEV electric vehicles, there is a need to integrate circuits into the electrical system of the vehicle to manage the charging of the vehicle batteries. In particular, it has recently been proposed that such circuits are able to manage the "plug&charge" function. In particular, plug&charge is a function that allows BEV and PHEV electric vehicles to automatically authenticate and authorize the charging process when connected to a compatible charging station, without the need for an app or a card. Plug&charge is based on the standard ISO 15118, which defines the communication protocol between electric vehicles and charging equipment. This function therefore simplifies and speeds up the charging experience for electric vehicle drivers, as well as allowing secure and transparent billing and payment.

Essentially, plug&charge requires that the EV has a digital certificate identifying the vehicle and the driver and that the charging station has a digital certificate identifying the operator and the location. The certificates are exchanged and verified during the handshake phase, before the charging session begins.

To implement this function, the electrical system of BEV or PHEV vehicles currently integrates several control units to manage the charging of the vehicle batteries which, in particular, are interconnected to each other to control specific phases and parameters of a charging process such as, for example, authentication phases, control of the battery charging current and monitoring of the vehicle charging capacity.

### Object and summary

The inventors have observed that the integration of circuits in the vehicle to control charging therefore implies an increase in the complexity of the wiring and, above all, an increase in latency times in the communications between the vehicle zone controller and external charging devices such as, for example, charging stations and induction chargers.

It is therefore an object of various embodiments of the present disclosure to provide a system of the type indicated above that is free from the drawbacks discussed above.

In particular, various embodiments of the present disclosure relate to an integrated control system for an electric vehicle. In particular, in various embodiments, the electric vehicle comprises one or more electric traction motors, one or more high-voltage batteries, and a charge port. The electric vehicle further comprises one or more high-voltage circuits comprising one or more power converters configured to supply the electric traction motor/motors via the battery/batteries, and to recharge the battery/batteries via the charge port. Therefore, in various embodiments the electric vehicle is a BEV or PHEV.

In various embodiments, the control system comprises a high-voltage circuit management subsystem, a powertrain torque management subsystem, and a vehicle dynamics management subsystem.

In particular, in various embodiments, the high-voltage circuit management subsystem comprises a subsystem for coordinating the AC and/or DC charging received via the power terminals of the charge port. The high-voltage circuit management subsystem further comprises a charging station communication subsystem configured to manage the exchange of information between the control system and the charging station, for example through charge port data terminals and/or wireless communications. In various embodiments, the high-voltage circuit management subsystem further comprises a charge port locking subsystem.

In particular, as will be described in more detail below, in various embodiments, the integrated control system is implemented in a single circuit comprising a microcontroller and one or more communication interfaces. For example, in various embodiments, the integrated control system comprises a CCS interface for charging and an Ethernet interface for communication with other electrical systems of the vehicle.

### Brief description of the figures

The invention will now be described with reference to the attached figures, provided purely by way of non-limiting example, in which:
- Figure 1 represents a block diagram of an Automotive Zone Controller according to the solution described herein;
- Figure 2 represents a block diagram of a high-voltage circuit management subsystem according to the solution described herein;
- Figure 3 represents a block diagram of a hardware architecture of an Automotive Zone Controller according to the solution described herein; and
- Figure 4 represents a flow diagram of a method for charging a vehicle according to the solution described herein.

### Detailed description

In the description that follows, numerous specific details are illustrated in order to provide a thorough understanding of the embodiments. The embodiments may be implemented without one or more of the specific details or with other methods, components, materials, etc. In other cases, well-known operations, materials, or structures are not depicted or described in detail in order to avoid making certain aspects of the embodiments unclear.

A reference to "an/one embodiment" throughout this specification is intended to indicate that a particular configuration, structure, or feature described with respect to the embodiment is included in at least one embodiment. Thus, phrases such as "in an/one embodiment" or the like appearing at various points throughout this specification do not necessarily all refer to the same embodiment. Furthermore, particular configurations, structures, or features may be combined in any suitable manner in one or more embodiments.

The references used herein are provided merely for convenience and do not define the scope or meaning of the embodiments.

As previously mentioned, various embodiments of this specification relate to an integrated control system.

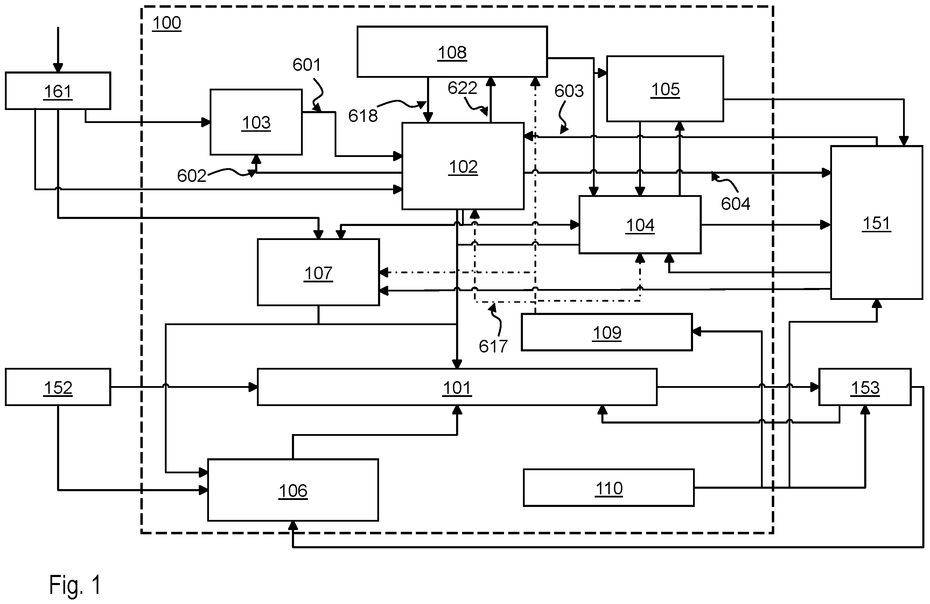

In particular, Figure 1 is a block diagram of one embodiment of an integrated control system referred to as the Front Zone Control Unit (FZCU) 100 for a BEV or PHEV electric vehicle. As is well known, a BEV or PHEV electric vehicle comprises an electric propulsion system 151. Typically, the vehicle further comprises one or more sensors 152 and actuators 153.

As depicted, the Front Zone Control Unit 100 comprises a plurality of control modules 101 to 110. For example, in various embodiments, the control system 100 comprises a multi-core microcontroller, i.e., an integrated circuit comprising a plurality of microprocessors programmable via software code. In this case, the control modules may be implemented (at least partially) via one or more software processes executed by the microcontroller processors of the system 100. For example, in various embodiments, each control module shown in Figure 1 may be executed via a respective application. In general, such applications may be executed by an operating system of the system 100, or one or more virtual machines executed by the system 100. For example, in various embodiments, each software module 101 to 110 is executed by a respective microprocessor of the multi-core microcontroller. Preferably, in this case, the access rights of each microprocessor are configured in such a way as to implement for each microprocessor a respective virtual machine. For example, the access rights of each virtual machine may be configured, in a way known per se, by a hypervisor that:
- is executed during the boot phase of the microcontroller to configure the microcontroller, for example the access rights and the operation of one or more peripherals of the microcontroller; and/or
- is executed on a dedicated microprocessor during normal operation of the microcontroller, for example to manage the operation of one or more peripherals shared by multiple virtual machines.

In the embodiment in question, the FZCU 100 comprises an integrated system management subsystem 101, a high-voltage circuit management subsystem 102, a low-voltage circuit management subsystem 103, for example a 12 V or 24 V voltage, a torque management subsystem 104, and a vehicle dynamics management subsystem 105. In particular, the vehicle dynamics management subsystem 105 is configured to control one or more systems, provided externally to the integrated control system 100, in order to adapt the longitudinal and/or lateral dynamics of the vehicle to the needs of the user. Specifically, the vehicle dynamics management subsystem 105 may control systems such as, for example, all-wheel drive and traction control systems, electronic limited slip differential control systems, torque vectoring systems, and regenerative braking systems.

In various embodiments, the integrated system also comprises one or more additional modules chosen from: a diagnostic and safety subsystem 106, a thermal management subsystem 107, a user interface management subsystem 108, a powermoding management subsystem 109, and an E/E architecture management subsystem 110. The operation of these optional modules is not particularly relevant for the purpose of this disclosure and their operation is known per se in the context of automotive control systems. In particular, the term powermoding indicates a set of parameters and procedures including the switching on and off of the propulsion system of a BEV or PHEV vehicle, the processing of wake-up signals, the activation of the high-voltage power system of said vehicle and, more generally, the setting of the vehicle in a predetermined operating state such as, for example, a drive ready state or a standby state.

The Front Zone Control Unit 100 further comprises a plurality of communication interfaces in order to allow the exchange of data between the various subsystems and/or external circuits.

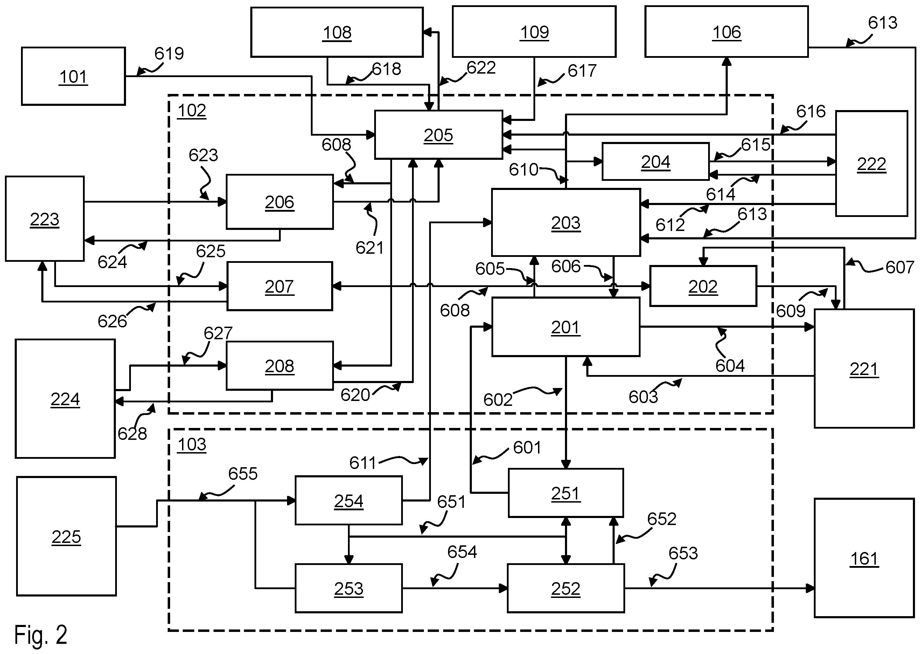

For example, in various embodiments, the Front Zone Control Unit 100 controls the propulsion component group 151, comprising one or more power converters 221 and one or more high-voltage batteries 222 (see also the description of Figure 2). Furthermore, the integrated control system 100 can receive and send data to the sensors 152 and actuators 153, both provided externally to the integrated control system 100. In general, each of these communications can use any analog and/or digital communication protocol.

In various embodiments, the Front Zone Control Unit 100 also communicates via a further communication system with a central supervisory unit 161, provided externally to the integrated control system 100. For example, for this purpose, the system 100 may implement an Ethernet or CAN interface, preferably CAN FD or CAN XL.

According to the present solution, the high-voltage circuit management subsystem 102 is configured to control the power entering and leaving a high-voltage system of the BEV or PHEV vehicle. As mentioned above, the high-voltage system comprises one or more high-voltage batteries equipped with contactors, a charge port and one or more power converters configured to supply power to the powertrain via the batteries, and to recharge the batteries via the charge port. In particular, the high-voltage circuit management subsystem 102 not only controls the electrical charging of the batteries, but also manages communications between the BEV or PHEV vehicle and external charging devices such as, for example, charging stations and inductive charging systems.

Figure 2 shows a block diagram of an embodiment of the high-voltage circuit management subsystem 102. In particular, in the embodiment in question, the high-voltage circuit management subsystem 102 comprises a DC/DC power converter management subsystem 201, a high-voltage system supervision subsystem 203, an AC and/or DC charging coordination subsystem 205, a charging station communication subsystem 206.

In various embodiments, the high-voltage circuit management subsystem 102 may also comprise one or more additional subsystems selected from: a charge port locking subsystem 207, a wireless charging management subsystem 208, a battery contactor drive subsystem 204, and an on-board charger (OBC) management subsystem 202.

In the embodiment in question, the power converter management subsystem 201 receives, as input, a signal 601 from the low-voltage circuit management subsystem 103.

In particular, in various embodiments, the high-voltage circuit management subsystem 102 and the low-voltage circuit management subsystem 103 are implemented through two different applications, and preferably through two different virtual machines, even more preferably through two separate processing cores within a single microcontroller, each processing core being associated with a respective virtual machine. In fact, in this way, the respective software processes can be developed separately and the system can ensure that the two systems do not interfere with each other. Therefore, the value 601 may be exchanged via a communication within the multi-core microcontroller of the system 100, such as a communication exchanged directly via an inter-processor communication exchanged via a bus or NoC (Network-on-Chip) of the microcontroller, or indirectly via a shared memory of the microcontroller or a communication exchanged via a communication interface of the microcontroller, such as a communication, e.g. IP (Internet Protocol), exchanged via an Ethernet interface of the system 100. For example, for this purpose, the subset 102 may be executed by a first virtual machine having a first IP address and the subset 103 may be executed by a second virtual machine having a second IP address.

In particular, in various embodiments, the power converter management subsystem 201 receives data 601 indicating a target voltage value 601. For example, in various embodiments, such voltage value 601 represents the desired voltage value on a given vehicle power line such as, for example, a 12 V line.

Furthermore, in the embodiment in question, the power converter management subsystem 201 receives from one or more power converters 221, provided externally to the Front Zone Control Unit 100, a state signal of the DC/DC converter 603.

Finally, in various embodiments, the power converter management subsystem 201 may receive from the high-voltage system supervision subsystem 203 a signal 606 containing any correction actions, processed by the high-voltage system supervision subsystem 203, suitable for maintaining the vehicle power supply voltages within desired ranges.

Consequently, the power converter management subsystem 201 produces as output, to the low-voltage circuit management subsystem 103, a signal 602 indicating correction actions to maintain the vehicle supply voltages within desired ranges. It should be noted that, in the automotive field, the term low-voltage usually indicates voltages between 12 V and 48 V, for example, 12 V, 24 V or 48 V.

Furthermore, in the embodiment in question, the power converter management subsystem 201 send as output, to the one or more power converters 221, a signal 604 containing desired voltage values on a given vehicle power line such as, for example, an 800 V line, a 48 V line, or a 12 V line.

Finally, in various embodiments, the power converter management subsystem 201 sends as output, to the high-voltage system supervision subsystem 203, a signal 605 representing the state of the one or more power converters 221.

In various embodiments, the on-board battery charger management subsystem 202 is configured to receive as input, from the one or more power converters 221, a feedback signal 607 containing information on the power transferred, and to receive, as input, the state of charge of the vehicle in a signal 608.

Then, based on the input signals 607 and 608, the on-board battery charger management subsystem 202 produces as output, to the one or more power converters 221, a signal 609 containing control information to adjust the power conversion.

In various embodiments, the high-voltage system supervision subsystem 203 receives as input, from the low-voltage circuit management subsystem 103, a signal 611 indicating the state of charge of the low-voltage battery, e.g. 12 V. Additionally or alternatively, the high-voltage system supervision subsystem 203 receives as input, from the high-voltage battery 222, provided externally to the Front Zone Control Unit 100, a signal 612 indicating the state of charge, condition, current, voltage and temperature of said high-voltage battery 222. Finally, in various embodiments, the high-voltage system supervision subsystem 203 receives, as input, a signal 613 indicating any correction actions coming from the diagnostic and safety subsystem 106.

Consequently, in various embodiments, the high-voltage system supervision subsystem 203 produces, as output, a signal 610 indicating the state of the high-voltage system bus, the state of the high-voltage battery 222, the state of the high-voltage battery contactors 222 and a thermal drift alert state. Said signal 610 is received, as input, from the diagnostic and safety subsystem 106, the battery contactor drive subsystem 204, and the AC and DC charging coordination subsystem 205. In addition, the high-voltage system supervision subsystem 203 is configured to produce, as output, the signal 606 indicating correction actions to maintain the vehicle supply voltages within the desired ranges.

In various embodiments, the battery contactor drive subsystem 204 receives, as input, the high-voltage system bus state signal 610 and a signal 614 indicating the contactor state. Accordingly, the contactor drive subsystem 204 produces as output, to the high-voltage battery 222, a contactor drive signal 615.

It should be noted that the term contactors refers to electrically controlled switches, such as relays, configured to open or close supply circuits in a vehicle. For example, contactors are usually provided at the main terminals of the high-voltage batteries and, optionally, in the charging circuit.

In various embodiments, the AC and/or DC charging coordination subsystem 205 receives, as input, the high-voltage system bus state signal 610, and a signal 616 indicating the power limit supported by the high-voltage battery 222. In various embodiments, the subsystem 205 also receives one or more signals selected from: a periodic wake-up signal 617, a signal 618 indicating scheduled charging data, V2X (Vehicle-to-Everything) charging options, and LED and button state.

In various embodiments, the AC and/or DC charging coordination subsystem 205 also receives, as input, a signal 619 indicating the state of a FOTA (Firmware Over The Air) service and diagnostic services, a signal 620 indicating the state of communications with the wireless charging interface and the charging capacity of said wireless charging interface, and/or a signal 621 containing the state of communications with the charging station, the charging capacity of the charging station and the V2G (Vehicle-to-Grid) certificate.

In the embodiment in question, the high-voltage system bus state signal 610 is generated by the high-voltage system supervision subsystem 203, while the periodic wake-up signal 617 is generated by said powermoding management subsystem 109, provided externally to the high-voltage circuit management subsystem 102. The scheduled charging and V2X options signal 618 comes from said user interface management subsystem 108, the signal 619 comes from the ECU management subsystem 101, and, finally, the signals 620 and 621 come from the wireless charging management subsystem 208 and the charging station communication subsystem 206, respectively.

In various embodiments, based on said input signals, the AC and/or DC charging coordination subsystem 205 produces, as outputs, the vehicle charge state signal 608 and a signal 622 indicating state commands for LEDs and icons and the state of charge of the high-voltage battery 222. Therefore, in various embodiments, the AC and/or DC charging coordination subsystem 205 is configured to calculate, based on the data received, the overall state of charge of the vehicle 608, and to monitor the state of the high-voltage batteries 222 in order to adjust the charging parameters and allow charging to be performed safely.

In various embodiments, the charging station communication subsystem 206 receives, as input, the vehicle charge state signal 608 and a signal 623 containing information from a charging station 223a. Based on said input signals 608 and 623, the charging station communication subsystem 206 produces, as output, signal 621 containing the state of communications with the charging station, the charging capacity of the charging station and the V2G certificate, and a signal 624 directed to the charging station 223a. Thus, the Front Zone Control Unit 100 is able to exchange information bidirectionally with the charging station 223a by means of signals 623 and 624.

In various embodiments, the charge port locking subsystem 207 receives, as input, the vehicle charge state signal 608 and a signal 625 indicating the charge port locking state of the charging station 223a. Furthermore, the charge port locking subsystem 207 is configured to produces, ad output, a signal 625 containing a command to lock the charge port 223.

In various embodiments, the high-voltage circuit management subsystem 102 comprises a wireless charging management subsystem 208. Such subsystem 208 receives, as input, the vehicle charge state signal 608 and a signal 627 from an induction charger 224. Based on said input signals 608 and 627, the wireless charging management subsystem 208 produces, ad output, the signal 620, indicating the state of communications with the wireless charging interface and the charging capacity of said wireless charging interface, and a signal 628 directed to the induction charger 224. Thus, the Front Zone Control Unit 100 is able to exchange information bidirectionally with the induction charger 224 by means of said signals 627 and 628.

In various embodiments, the low-voltage circuit management subsystem 103, comprising in turn a low-voltage system energy target determination module 251, a low-voltage powered load supervision module 252, an optional dual battery system supervision module 253, and a low-voltage battery management and diagnosis module 254.

Specifically, in various embodiments, the low-voltage system energy target determination module 251 receives, as input, the signal 602, indicating the state of the DC/DC converter 221 and correction actions, from the high-voltage circuit management subsystem 102, in particular from the DC/DC power converter management subsystem 201. In addition to the signal 602, the low-voltage system energy target determination module 251 receives, as input, a signal 651 indicating the state of a low-voltage battery equipped with a sensor 225, and a 652 signal indicating the energy demand of the low-voltage powered loads.

Accordingly, the low-voltage system energy target determination module produces, as output, the target voltage signal 601.

In various embodiments, the low-voltage powered load supervision module 252 receives, as input, the signal 651 indicating the state of the low-voltage battery equipped with sensor 225, and a signal 654 indicating the state of the dual battery system. Based on said input signals 651 and 654, the low-voltage powered load supervision module 252 produces, as output, a signal 652 indicating the energy demand of the low-voltage powered loads, and a signal 653 indicating a request for load partitioning or shedding that is received by the central supervision system 161.

In various embodiments, the dual battery system supervision module 253 receives, as input, a signal 651 indicating the state of the low-voltage battery equipped with sensor 225, and optionally a signal 654 indicating the state of the dual battery system.

Finally, the low-voltage battery management and diagnosis module 254 receives as input, from the low-voltage battery equipped with sensor 225, a signal 655 containing the data generated by the sensor and produces, as output, the low-voltage battery charge state signal 611, and the signal 651 indicating the state of the low-voltage battery equipped with sensor 225.

In order to integrate the various functionalities and subunits described above within the Front Zone Control Unit 100, which has been described so far in functional terms, a hardware architecture of a Front Zone Control Unit 100 according to the present solution is presented below.

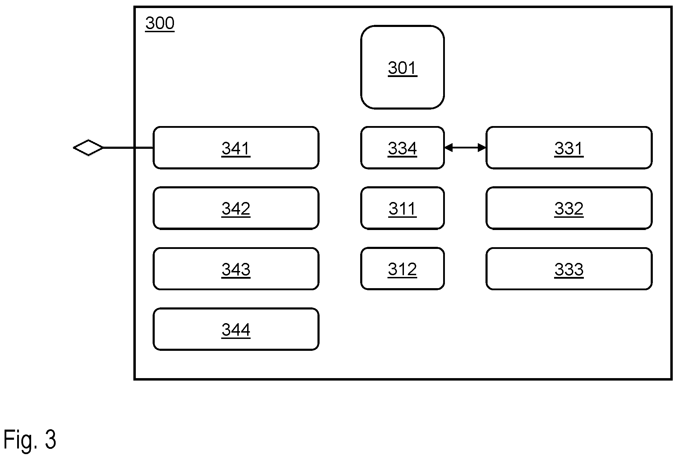

A block diagram 300 depicting a hardware architecture of a Front Zone Control Unit 100 according to the solution described herein is shown in Figure 3.

As illustrated, the Front Zone Control Unit 300 includes a microcontroller 301. The microcontroller 301 comprises a plurality of processing cores, for example, 4, 6 or 8 processing cores. Alternatively, the microcontroller 301 may comprise one or more locksteps, i.e., processing units comprising a pair of redundant processing cores, which allow for a higher degree of security than a simple processing core.

In particular, in various embodiments, each processing core comprises one or more microprocessors programmable via software code. Therefore, in various embodiments, the Front Zone Control Unit 300 comprises a non-volatile memory 311, such as a flash memory, configured to store the software executed by the processing cores, i.e., the so-called firmware. In various embodiments, the memory 311 may also be writable, e.g., for FOTA (Firmware Over The Air) updates. For example, typically, the memory 311 is connected to the processing cores 301 via a communication system, such as a bus or NoC. Although not shown in Figure 3, the system 300 typically also comprises a volatile memory, such as a Random-Access Memory (RAM), e.g., used to store temporary results.

In various embodiments, the system 300 includes a real time clock 312, used to manage the scheduled wake-up of the Front Zone Control Unit 300 for charging activities previously scheduled by the user. In particular, said microcontroller 301 is capable of performing the operations described above and related to the corresponding subsystems such as, for example, the voltage level supervision and correction operations performed in the high-voltage circuit management subsystem 102. Specifically, the multi-core architecture of the microcontroller 301 allows the processing of data from multiple subsystems and/or units without impairing the stability and responsiveness of the processing system.

In various embodiments, the Front Zone Control Unit 300 includes a CCS (Combined Charging System) charging interface 331, a CHAdeMO charging interface 332, and/or a GB/T charging interface 333, in order to manage the different charging protocols used in different geographical areas of the world. For example, the Front Zone Control Unit 300 may include for this purpose a PLC (Power Line Communication) transceiver 334 coupled to the CCS charging interface 331. In contrast, the CHAdeMO 332 and GB/T 333 charging interfaces may not even require dedicated chips, as they are based on the CAN (Controller Area Network) protocol, since modern microcontrollers often already include a CAN transceiver.

In various embodiments, the Front Zone Control Unit 300 includes an Ethernet interface 341, a Controller Area Network (CAN) interface 342, a Local Interconnect Network (LIN) interface 343, and a Power Line Communication (PLC) interface 344. Although shown externally to the microcontroller 301, at least a portion of these interfaces may be implemented via hardware and/or software within the microcontroller 301.

Since said CCS 331, CHAdeMO 332, and GB/T 333 charging interfaces are provided within the Front Zone Control Unit 300, it is achieved the advantage of reducing the overall latency in communications with external charging devices such as, for example, the charging station 223a and/or the induction charger 224 and, more generally, of reducing the latency in the exchange of information between the subsystems of the Front Zone Control Unit 100 described above thanks to the higher level of integration.

Furthermore, the present solution advantageously offers a reduction in the components required to perform the BEV vehicle battery charging operations, in compliance with the standards of the interfaces described above, i.e. CCS, CHAdeMO and GB/T. Specifically, the reduction in the components required for the charging operations is desirable as it allows to reduce the probability of failures and, in general, to improve the repairability of the vehicle in the event of a failure.

The advantages described above are evident in relation to the Plug & Charge type charging operations.

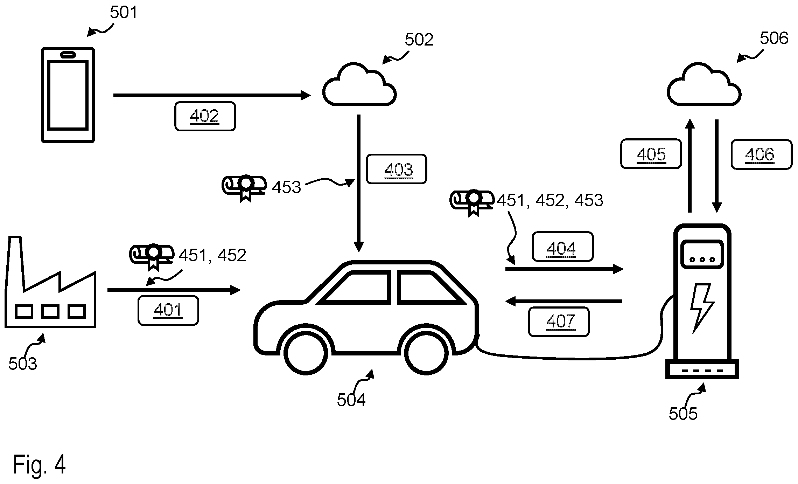

In particular, Figure 4 shows a flow diagram representing a charging procedure of a BEV or PHEV vehicle, indicated with the reference number 504, according to the solution described here.

In a first step 401, performed during the production of the vehicle 504, the vehicle 504 is provided with an OEM provisioning certificate 451, provided by an OEM (Original Equipment Manufacturer) 503, and a V2G root certificate 452, provided by a charging service provider 502.

Subsequently, in a step 402, a user 501 signs a supply contract with the charging service provider 502.

Subsequently, in a step 403, the user authenticates on the vehicle 504 and, at the same time, a contract certificate 453, provided by the charging service provider 502, is downloaded via mobile network and installed in the vehicle 504.

Subsequently, in a step 404, the user connects the vehicle 504 to a charging station 505. At the same time, authentication is performed at the charging station 505 through the contract certificate 453 installed in the vehicle, which certifies that the user in possession of such certificate is in possession of a regular supply contract. In particular, this step 404 provides for an exchange of data between the vehicle 504 and the charging station 505, which is regulated by the standard ISO 15118.

In a step 405, the charging station 505 forwards the charging request to a remote processing system 506 which authorizes the request associated with said user and said vehicle 504.

In response to such forwarding, in a step 406 the remote processing system 506 sends feedback containing the authentication state of the user.

If authentication has been successful, in a step 407 the charging station 505 begins to supply charging current to the vehicle 504.

It should be noted that, according to the present solution, the steps of the charging process described herein, in particular those involving data processing in the vehicle 504, can be performed by means of the integrated control system 100 described herein.

Specifically, these steps include:
- providing the OEM provisioning certificates 451 and V2G root certificates 452, identified by reference 401;
- authenticating the user and installing a contract certificate 453 in the vehicle, identified by reference 403;
- authenticating the user and vehicle at the same time as connecting to a charging station, identified by reference 404; and
- supplying a charging current to the vehicle, identified by reference 407.

In light of the above, it is therefore possible to carry out said steps 401, 403, 404 and 406 using the Front Zone Control Unit 100 of the solution described here. On the contrary, solutions already known in the sector involve the use of a plurality of ECUs (Electronic Control Units), which therefore show the drawbacks discussed above.

Furthermore, as explained above, in various embodiments, the integrated system 100 also implements the powertrain torque management subsystem 104 and the vehicle dynamics management subsystem 105. In fact, the high-voltage systems actually provide the power needed for the operation of the entire propulsion system, including the electric traction motors that allow control of the torque, in order to move the vehicle and manage its longitudinal and lateral dynamics.

In various embodiments, the integrated system 100 also implements the thermal management subsystem 107. In fact, a propulsion system normally requires precise heating/cooling control to keep the components in a precise temperature range that ensures their operating efficiency.

In light of the above, the feature of the solution described here are clear, as are its advantages. In summary, the zoned architecture of the solution described here is particularly advantageous compared to the centralized E/E architectures typically adopted.

In this regard, various embodiments of the solution described here advantageously allow a reduction in the number of control units used in vehicles, facilitating a reduction in costs thanks to the centralization of functions, thus making it possible to reuse software and facilitating scalability on multiple vehicle platforms.

Further advantages of the solution described here include a reduction in the complexity of the wiring harnesses, which facilitates a consequent reduction in vehicle weight and costs, and at the same time simplifies its construction. According to some aspects of the solution described here, it is also possible to perform OTA (Over The Air) updates and add new functions to vehicles, without the need for physical interventions on the vehicles, for example by relying on the manufacturer, which can be inconvenient and unsustainable from an economic point of view. Therefore, in general the solution described here facilitates the implementation of complex control strategies quickly and effectively, limiting the constraints imposed by architectures comprising a plurality of interconnected modules.

Of course, notwithstanding the principle of the invention, the construction details and the embodiments may vary widely with respect to what is described and illustrated without thereby departing from the scope of the present invention, as defined in the attached claims.

## Claims

1. An integrated control system (100; 300) for an electric vehicle comprising one or more electric traction motors (151), one or more high-voltage batteries (222), a charge port (223) and one or more power converters (221) configured to supply electric power to said one or more electric traction motors (151) via said one or more batteries (222), and to recharge said one or more batteries (222) via the charge port (223), wherein said integrated control system (100; 300) includes a microcontroller (301),
**characterized in that** said microcontroller (301) comprises a plurality of microprocessors configured to execute the following software modules:
- a first software module configured to implement a high-voltage circuit management subsystem (102) configured to:
- monitor (203) said one or more batteries (222),
- monitor and control (201, 205) said one or more power converters (221) to supply electric power to said one or more electric traction motors (151) via said one or more batteries (222) and to recharge said one or more batteries (222) via the charge port (223), and
- manage (206, 207) the exchange of information with a charging station (223a);
- a second software module configured to implement a powertrain torque management subsystem (104) configured to monitor and control said one or more electric traction motors (151).

2. The integrated control system (100; 300) according to Claim 1, wherein said high-voltage circuit management subsystem (102) includes:
- an AC and/or DC charging coordination subsystem (205) configured to calculate an overall state of charge of the vehicle (608), and monitor the charging capacity (616) of said one or more high-voltage batteries (222).

3. The integrated control system (100; 300) according to Claim 1 or Claim 2, wherein said high-voltage circuit management subsystem (102) comprises:
- a charging station communication subsystem (206) configured to manage said exchange of information with a charging station (223a) in plug&charge mode.

4. The integrated control system (100; 300) according to any of the previous claims, wherein said high-voltage circuit management subsystem (102) comprises at least one of:
- a power converter management subsystem (201) configured to monitor and control said one or more power converters (221);
- a high-voltage system supervision subsystem (203) configured to monitor said one or more high-voltage batteries (222);
- an on-board charger management subsystem (202) configured to monitor and control an on-board charger of said electric vehicle;
- an inductive charging management subsystem (208) configured to manage the exchange of information with an inductive charging system (224); and
- a battery contactor drive subsystem (204) configured to monitor and drive one or more contactors of said one or more high-voltage batteries (222).

5. The integrated control system (100; 300) according to any of the previous claims, wherein said one or more power converters (221) are configured to generate a voltage to supply electric power to a low-voltage circuit (225), and wherein said microprocessors are configured to execute:
- a third software module configured to implement a low-voltage circuit management subsystem (103) configured to:
- monitor a signal (655) indicative of said voltage to supply electric power to said low-voltage circuit (225), and
- send to said high-voltage circuit management subsystem (102) data (601) indicating correction actions in such a way as to adjust said voltage to a required value.

6. The integrated control system (100; 300) according to any of the previous claims, wherein said microprocessors are configured to execute:
- a fourth software module configured to implement a vehicle dynamics management subsystem (105) configured to control one or more systems, provided externally to said integrated control system (100), to control the longitudinal and/or lateral dynamics of the vehicle.

7. The integrated control system (100; 300) according to any of the previous claims, wherein said microprocessors are configured to execute:
- a fifth software module configured to implement an integrated system management subsystem (101) configured to monitor a Firmware Over The Air update service, FOTA to update the firmware of said microcontroller (301).

8. The integrated control system (100; 300) according to any of the previous claims, wherein each software module is executed via a respective virtual machine associated therewith, and wherein a microprocessor of said plurality of microprocessors is configured to execute a hypervisor configured to set for each virtual machine respective access rights within said microcontroller (301).

9. The integrated control system (100; 300) according to any of the previous claims, wherein each virtual machine associated with a respective software module is executed via a respective microprocessor of said microcontroller (301).

10. The integrated control system (100; 300) according to any of the previous claims, wherein said microcontroller (301) comprises a plurality of lockstep processing cores configured to operate in redundant mode.

11. A vehicle (504) comprising:
- one or more electric traction motors (151),
- one or more high-voltage batteries (222),
- a charge port (223),
- one or more power converters (221) configured to supply said one or more electric traction motors (151) via said one or more batteries (222), and to recharge said one or more batteries (222) via the charge port (223), and
- an integrated control system (100; 300) according to any of the previous claims.

12. A method (400) for charging a vehicle (504) according to Claim 11, comprising the steps of:
- storing (401) in said integrated control system (100; 300) of said vehicle (504) an OEM provisioning certificate (451), provided by an OEM, Original Equipment Manufacturer (503), and a V2G root certificate (452), provided by a charging service provider (502);
- installing, in said integrated control system (100; 300), a contract certificate (453) associated with the user and said vehicle (504), provided by the charging service provider (502);
- in response to connecting the charge port (223) of said vehicle to a charging station by the user, authenticating (404) said user and said vehicle via said first software module (102), using said OEM provisioning certificate (451), said V2G root certificate (452), and said contract certificate (453); and
- suppling (407) a charging current to said vehicle (504) via said charging station.
